# EUROPÄISCHE PATENTANMELDUNG

(11) **EP 4 227 973 A1**
(43) Veröffentlichungstag der Anmeldung: **16.08.2023**
(21) Anmeldenummer: 23156752.0
(22) Anmeldetag: 15.02.2023
(51) Int. Cl.: H01H 39/00

(54) **FERNAUSLÖSER FÜR PYROTECHNISCHE ENERGIEABGABEN**

(30) Priorität: 15.02.2022 DE 102022103535
(71) Anmelder: RWS GmbH, 90765 Fürth (DE)
(72) Erfinder: Rost, Henning, 91056 Erlangen (DE); Winter, Andreas, 90768 Fürth (DE)
(74) Vertreter: Schmid, Nils T.F.

(57) **Zusammenfassung**

Die vorliegende Erfindung betriff ein Verfahren zum Bereitstellen einer vorbestimmten pyrotechnischen Energieabgabe an eine pyrotechnische Trenneinrichtung (3) zum Trennen einer zu einer elektrischen Energiequelle, wie einer Batterie oder einem Akkumulator, zum Abführen und/oder Empfangen elektrischer Energie führenden elektrischen Leitung (5), wie einem Kabel, einem Draht, einer Leiterbahn oder dergleichen, bei dem: eine Temperatur der elektrischen Energiequelle oder in dessen Nähe erfasst wird; und, wenn die erfasste Temperatur eine vorbestimmte Temperaturschwelle überschreitet, die protechnische Trenneinrichtung (3) fernaktiviert wird, um eine von der elektrischen Energiequelle örtlich entfernte elektrische Leitung (5) zu durchtrennen.

## Beschreibung

Die vorliegende Erfindung betrifft ein Verfahren und ein System zum Fernauslösen einer pyrotechnischen Energieabgabe beispielsweise zum Aktivieren von pyrotechnischen Trenneinrichtungen, die dazu eingerichtet sind, eine zu einer elektrischen Energiequelle, wie einer Batterie, einer galvanischen Zelle oder einem Akkumulator, zum Abführen/oder Empfangen elektrischer Energie führende elektrische Leitung, wie ein Kabel, ein Draht, eine Leiterbahn oder dergleichen, zu trennen.

Solche pyrotechnischen Trenneinrichtungen sind dazu ausgelegt, eine elektrische Ladekopplung zwischen einer elektrischen Energiequelle und einer elektrischen Energieversorgung bzw. einer elektrischen Entladekopplung zwischen einer vorzugsweise aufladbaren Energiequelle und einem elektrischen Verbraucher zu trennen. Beispielsweise soll mit einer solchen pyrotechnischen Trenneinrichtung verhindert werden, dass an Elektronikgeräten eine Überhitzung insbesondere der Batterie einhergeht, was zu einer Beschädigung des Elektronikgeräts führen kann. Derartige Batterien besitzen eine Abgabeleistung von deutlich über 1 Ampere, insbesondere in einem Bereich von 1 Ampere bis 70 Ampere, insbesondere in einem Bereich von 10 Ampere bis 50 Ampere, insbesondere in einem Bereich von 10 Ampere bis 30 Ampere, oder in einem Bereich von 30 Ampere bis 50 Ampere, oder in einem Bereich von 50 Ampere bis 70 Ampere, beispielsweise 45 Ampere, 35 Ampere oder 40 Ampere.

Pyrotechnische Trenneinrichtungen können auch derart gestaltet sein, dass diese zum Trennen einer zu einem Träger für elektronische Bauteile, insbesondere eine Leiterplatte, Leiterkarte, oder Platine, führenden oder darin vorgesehenen elektrisch leitenden Leiterbahn zum Abführen und/oder Empfangen der elektrischen Energie eingesetzt werden können. Derartige pyrotechnische Trenneinrichtungen sowie ein System zum Bereitstellen einer pyrotechnischen Energieabgabe zum Aktivieren von pyrotechnischen Trenneinrichtungen sind aus der deutschen Anmeldung DE 102019126192 B3 der Anmelderin bekannt, deren Inhalt, insbesondere in Bezug auf die Funktionsweise und den Aufbau der pyrotechnischen Trenneinrichtungen, hierin unter Bezugsname vollständig integriert ist.

Es hat sich herausgestellt, dass die elektrischen Kabel des zu überwachenden und möglicherweise überhitzten Elektronikbauteils beispielsweise aus bauraumtechnischen Gründen nicht immer zugänglich sind oder zumindest schwer erreichbar sind. Beispielsweise in Kraftfahrzeugen befinden sich oft unterschiedliche elektrische und elektronische Komponenten, bei deren Überhitzung eine extrem schnelle Abschaltung der elektrischen Energiequelle gefordert wird, um gefährliche Kettenreaktionen zu unterbinden. Es ist in der Regel nicht möglich, den verfügbaren Bauraum zu verändern, insbesondere nicht dadurch, dass die elektronischen Komponenten versetzt werden. Im Stand der Technik existieren keine Lösungen, Notabschaltmechanismen für schwer oder gar nicht zugängliche Elektronikkomponenten bzw. für Elektronikkomponenten einzurichten, bei denen es insbesondere wegen eines begrenzten Bauraums nicht möglich ist, dessen elektrische Kabel oder Leiterbahnen unmittelbar im Bereich der Elektronikkomponente selbst zu kappen.

Eine Aufgabe der vorliegenden Erfindung besteht darin, die Nachteile des Standes der Technik zu überwinden, insbesondere eine bauraumunabhängige pyrotechnische Energieabgabe zuverlässig sicher zu stellen.

Diese Aufgabe wird durch den Gegenstand der unabhängigen Ansprüche gelöst.

Gemäß einem ersten Aspekt der vorliegenden Erfindung ist ein Verfahren zum Bereitstellen einer vorbestimmten pyrotechnischen Energieabgabe von vorzugsweise mindestens 0,5 J an eine pyrotechnische Trenneinrichtung zum Trennen einer zu einer elektrischen Energiequelle, wie einer Batterie oder einem Akkumulator, zum Abführen und/oder Empfangen elektrischer Energie führenden elektrischen Leitung, wie einem Kabel, einem Draht, einer Leiterbahn oder dergleichen, vorgesehen. Pyrotechnische Energieabgaben werden beispielsweise in pyrotechnischen Trenneinrichtungen, pyrotechnischen Schalt- oder Wirkeinrichtungen eingesetzt, die dazu eingerichtet sind, eine zu einer elektrischen Energiequelle, wie einer Batterie, einer galvanischen Zelle oder einem Akkumulator, zum Abführen und/oder Empfangen elektrischer Energie führenden elektrischen Leitung, wie ein Kabel, ein Draht, eine Leiterbahn, oder dergleichen, zu trennen, zu schneiden, zu durchstanzen, zu beschädigen oder dergleichen. Derartige pyrotechnische Trenneinrichtungen sind dazu ausgelegt, eine elektrische Ladekopplung zwischen einer elektrischen Energiequelle und einer elektrischen Energieversorgung bzw. einer elektrischen Endladekopplung zwischen einer vorzugsweise aufladbaren Energiequelle und einem elektrischen Verbraucher zu trennen. Beispielsweise soll mit der pyrotechnischen Trenneinrichtung verhindert werden, dass an Elektronikgeräten eine Überhitzung insbesondere der Batterien, wie Lithiumionen-Batterien, einhergeht, was zu einer Beschädigung des Elektronikgeräts führen kann. Derartige Batterien können eine Stromstärke von deutlich über 1 A, insbesondere in einem Bereich von 1 A bis 70 A, insbesondere in einem Bereich von 10 A bis 50 A, insbesondere in einem Bereich von 10 A bis 30 A oder einem Bereich von 30 A bis 50 A, oder in einem Bereich von 50 A bis 70 A, beispielsweise 45 A, 35 A oder 40 A, bereitstellen. Pyrotechnische Trenneinrichtungen können auch derart gestaltet sein, dass diese zum Trennen einer zu einem Träger für elektronische Bauteile, insbesondere Leiterplatte, Leiterkarte oder Platine, oder darin vorgesehenen elektrisch leitenden Leiterbahnen zum Abführen und/oder Empfangen elektrischer Energie eingesetzt werden können. Gattungsgemäße pyrotechnische Trenneinrichtungen sind aus der deutschen Anmeldung DE 10 2019 101 430.1 desselben Anmelders bekannt, dessen Inhalt, insbesondere in Bezug auf die Funktionsweise und den Aufbau pyrotechnischer Trenneinrichtungen, hierin unter Bezugnahme vollständig integriert ist.

Bei dem erfindungsgemäßen Verfahren wird eine Temperatur der elektrischen Energiequelle oder in dessen Nähe erfasst. Sofern die Temperatur in der Nähe der elektrischen Energiequelle erfasst wird, kann damit ein Temperaturwert gemeint sein, der in unmittelbarer Nähe der Energiequelle erfasst wird oder jedenfalls in irgendeiner Weise mit der Temperatur der zu überwachenden Energiequelle zusammenhängt. Der Ort der Temperaturmessung kann als Messstelle bezeichnet werden. Beispielsweise übernimmt die Temperaturmessung ein pyrotechnischer Temperatursensor.

Des Weiteren wird gemäß dem erfindungsgemäßen Verfahren die pyrotechnische Trenneinrichtung dann fernaktiviert, wenn die erfasste Temperatur eine vorbestimmte Temperaturschwelle überschreitet, um die elektrische Leitung an einer von der elektrischen Energiequelle, insbesondere der Messstelle, örtlich entfernten Stelle, insbesondere an einer Trennstelle, zu durchtrennen. Das Überschreiten der vorbestimmten Temperaturschwelle kann als Bedingung bzw. Auslöseparameter für die Fernaktivierung der pyrotechnischen Trenneinrichtung verstanden werden. Bei der vorbestimmten Temperaturschwelle kann es sich um eine energiequellenspezifische, eine spezifisch auf ein Elektronikgerät, dem die Energiequelle zugeordnet ist, abgestimmte oder eine für die Umgebung der Energiequelle festgelegte Temperaturschwelle handeln, bei deren Erreichen kritische Kettenreaktionen erwartet werden. Beispielsweise kann die Temperaturschwelle so gewählt sein, dass sie um einen Sicherheitsprozentsatz, beispielsweise im Bereich von 1% bis 30%, unterhalb der kritischen Maximaltemperatur für die Energiequelle bzw. die in der Umgebung der Energiequelle gemessene Temperatur reduziert ist. Der Grundgedanke der vorliegenden Erfindung besteht in der Trennung von Messung und Kappung, insbesondere in der Auftrennung von Messstelle und Kappstelle. Das erfindungsgemäße Verfahren ermöglicht es, möglicherweise überhitzte Energiequellen, die beispielsweise in Elektronikkomponenten verbaut sind, zu überwachen und auch dann zuverlässig bei deren Überhitzung von der Energieversorgung abzutrennen, wenn die elektrische Leitung der entsprechenden Energiequelle beispielsweise aus bauraumtechnischen Gründen nicht unmittelbar an der Energiequelle selbst bzw. am Ort der Temperaturerfassung zugänglich ist. Insofern ist es mit dem erfindungsgemäßen System möglich, unabhängig vom zur Verfügung stehenden Bauraum und den bauraumtechnischen Gegebenheiten zuverlässig Energiequellen und/oder Elektrogeräte bei einer Überhitzung zuverlässig abzuschalten. Unter Fernaktivierung kann somit unter anderem verstanden werden, dass eine irgendwie geartete Signalübertragung in Abhängigkeit der erfassten Temperatur zwischen der Messstelle und der von der pyrotechnischen Trenneinrichtung festgelegten Kappstelle erfolgt.

In einer beispielhaften Ausführung des erfindungsgemäßen Verfahrens erfolgt die Fernaktivierung durch eine insbesondere nicht-elektrische pyrotechnische Kettenreaktion. Die Kettenreaktion kann beispielsweise rein pyrotechnisch sein. Insofern kommt das erfindungsgemäße Verfahren ohne eigene Energiequelle aus und ist somit energieeffizient zu betreiben und vor allem auch in den für die Energiequellen von Elektrokomponenten möglicherweise kritischen Zuständen bei Energieversorgungsausfällen wirksam.

Gemäß einer weiteren beispielhaften Ausführung des erfindungsgemäßen Verfahrens erfolgt unter einer exothermen chemischen Initialreaktion eine pyrotechnische Initialumsetzung, wenn die erfasste Temperatur eine vorbestimmte Temperaturschwelle überschreitet. Unter exothermer chemischer Reaktion wird im Allgemeinen eine Reaktion verstanden, der weniger Energie zu deren Aktivierung zugeführt wird, als die Reaktion an Energie freigibt bzw. abgibt. Beispielsweise kann ein pyrotechnisches Material bereitgestellt sein, das bei einer materialspezifischen Umsetztemperatur pyrotechnisch umsetzt.

Vorzugsweise werden pyrotechnische Materialien bereitgestellt, deren Umsetztemperaturen deutlich über 100°C, insbesondere über 110°C, 120°C, 130°C, 140°C, 150°C, oder sogar über 170°C, 200°C, 220°C oder über 250°C, insbesondere über 300°C liegen. Beispielsweise wird das Kalium-Salz von 1,4-dihydro-5,7-dinitrobenzofurazan-4-ol 3-oxide (kurz: Kalium-Dinitrobenzofuroxanat, K-Benzanat, oder KDNBF), K/Ca 2,4,6-trinitrobenzene-1,3-bis(olate) (kurz: Kalium/Calcium-Styphnat, K/CaStyp) oder Blei-2,4,6-trinitroresorcinat (kurz: Bleitrizinat, Bleistyphnat, Trizinat) als Bestandteil des pyrotechnischen Materials eingesetzt. Die genannten Stoffe können in Mischungen mit weiteren Komponenten verwendet werden. Der Schmelzpunkt bzw. Zersetzungspunkt beispielsweise von reinem KDNBF beträgt ca. 170°C. Bei Mischungen von KDNBF mit ausgewählten Komponenten lassen sich die Verpuffungstemperaturen im Bereich von 150°C bis 160°C steuern, und die Verpuffungstemperaturen der Mischungen können tiefer liegen als die der Einzelkomponenten. Weitere geeignete Materialien finden sich in der deutschen Veröffentlichungsschrift DE 102006060145 A1 der Anmelderin. Des Weiteren können Primärexplosivstoffe einzeln oder in Kombination mit Zusatzstoffen zur Erreichung einer höheren Wirksamkeit eingesetzt werden. Als Beispiele seien genannt Diazodinitrophenol (kurz: Diazol, Dinol, oder DDNP), Salze der Styphinsäure (wie beispielsweise K/Ca 2,4,6-trinitrobenzene-1,3-bis(olate) (kurz: Kalium/Calcium-Styphnat, K/CaStyp) oder Blei-2,4,6-trinitroresorcinat (kurz: Bleitrizinat, Bleistyphnat, Trizinat)), Tetrazen, Salze des Dinitrobenzofuroxanats, 1-(2,4,6-Trinitrophenyl)-5-(1-(2,4,6-trinitrophenyl)-1H-tetrazol-5-yl)-1 H-tetrazol (kurz: Pikrazol), oder N-Methyl-N-2,4,6-tetranitroanilin (kurz: Tetryl). Als pyrotechnisches Material kann zum Beispiel K/Ca 2,4,6-trinitrobenzene-1,3-bis(olate) (kurz: Kalium/Calcium-Styphnat, K/CaStyp) eingesetzt werden. Weitere geeignete pyrotechnische Materialien sind beispielsweise in der Veröffentlichungsschrift EP 1 890 986 B1, welche auf die internationale Patentanmeldung WO 2006/128910 und die deutschen Patentanmeldungen DE 10 2005 025 746 und DE 10 2006 013 622 zurückgeht, beschrieben, welche unter Bezugnahme in den Offenbarungsgehalt der vorliegenden Erfindung miteinbezogen sein sollen.

Die pyrotechnische Initialumsetzung kann entsprechend dem in DE 10 2019 126192 B3 beschriebenen Verfahren erfolgen, welches hierin unter Bezugnahme vollständig aufgenommen ist.

Gemäß einer beispielhaften Weiterbildung des erfindungsgemäßen Verfahrens bewirkt die pyrotechnische Initialumsetzung unter einer exothermen chemischen Folgereaktion eine pyrotechnische Übertragungsumsetzung. Mit anderen Worten löst die pyrotechnische Initialumsetzung eine nachgeschaltete pyrotechnische Übertragungsumsetzung aus. Für die pyrotechnische Initialumsetzung kann ebenfalls pyrotechnisches Material bereitgestellt sein, das entsprechend der obigen Ausführung gewählt sein kann. Die pyrotechnische Übertragungsumsetzung erfolgt mit einem zeitlichen Versatz ΔT₁ zur pyrotechnischen Initialumsetzung.

In einer weiteren beispielhaften Weiterbildung des erfindungsgemäßen Verfahrens bewirkt die pyrotechnische Übertragungsumsetzung eine pyrotechnische Anzündumsetzung der pyrotechnischen Trenneinrichtung, um die pyrotechnische Trenneinrichtung auszulösen. Mit anderen Worten initiiert die pyrotechnische Übertragungsumsetzung die Aktivierung der pyrotechnischen Trenneinrichtung dadurch, dass eine der pyrotechnischen Trenneinrichtung zuzuordnende pyrotechnische Anzündumsetzung erfolgt. Für die pyrotechnische Anzündumsetzung kann pyrotechnisches Material bereitgestellt sein, welches beispielsweise zur pyrotechnischen Trenneinrichtung gehört, welches ferner gemäß der obigen Beschreibung ausgewählt sein kann. Die pyrotechnische Anzündumsetzung erfolgt daher mit einem zeitlichen Versatz ΔT₂ zur pyrotechnischen Übertragungsumsetzung.

Durch das erfindungsgemäße Verfahren ist insofern eine pyrotechnische Kettenreaktion gegeben, um letztlich die pyrotechnische Trenneinrichtung zum Trennen der elektrischen Leitung zu aktivieren.

Gemäß einem weiteren Aspekt der vorliegenden Erfindung, der mit den vorhergehenden Aspekten und beispielhaften Ausführungen kombinierbar ist, ist ein System zum Bereitstellen einer vorbestimmten pyrotechnischen Energieabgabe, insbesondere von wenigstens 0,5 J, an eine pyrotechnische Trenneinrichtung zum Trennen einer zu einer elektrischen Energiequelle, wie einer Batterie oder einem Akkumulator, zum Abführen und/oder Empfangen elektrischer Energie führenden elektrischen Leitung, wie einem Kabel, einem Draht, einer Leiterbahn oder dergleichen, bereitgestellt. Des Weiteren können erfindungsgemäße Systeme beispielsweise dazu dienen, eine pyrotechnische Energieabgabe für eine pyrotechnische Trenneinrichtung zum Trennen einer elektrischen Ladekopplung beziehungsweise einer elektrischen Endladekopplung zwischen einer elektrischen Energiequelle und einem elektrischen Verbraucher zur Verfügung zu stellen. Pyrotechnische Energieabgaben werden beispielsweise in pyrotechnischen Trenneinrichtungen eingesetzt, die dazu eingerichtet sind, eine zu einer elektrischen Energiequelle, wie einer Batterie oder einem Akkumulator, zum Abführen und/oder Empfangen elektrischer Energie führenden elektrischen Leitung, wie ein Kabel, ein Draht, eine Leiterbahn, oder dergleichen, zu trennen. Derartige pyrotechnische Trenneinrichtungen sind dazu ausgelegt, eine elektrische Ladekopplung zwischen einer elektrischen Energiequelle und einer elektrischen Energieversorgung bzw. einer elektrischen Endladekopplung zwischen einer vorzugsweise aufladbaren Energiequelle und einem elektrischen Verbraucher zu trennen. Beispielsweise soll mit der pyrotechnischen Trenneinrichtung verhindert werden, dass an Elektronikgeräten eine Überhitzung insbesondere der Batterien, wie Lithiumionen-Batterien, einhergeht, was zu einer Beschädigung des Elektronikgeräts führen kann. Derartige Batterien können eine Stromstärke von deutlich über 1 A, insbesondere bis zu 10 A bzw. 50 A, bereitstellen. Pyrotechnische Trenneinrichtungen können auch derart gestaltet sein, dass diese zum Trennen einer zu einem Träger für elektronische Bauteile, insbesondere Leiterplatte, Leiterkarte oder Platine, oder darin vorgesehenen elektrisch leitenden Leiterbahnen zum Abführen und/oder Empfangen elektrischer Energie eingesetzt werden können.

Das erfindungsgemäße System umfasst einen pyrotechnischen Anzünder, der der Temperatur der elektrischen Energiequelle ausgesetzt ist oder einer Temperatur insbesondere in unmittelbarer Nähe der Energiequelle ausgesetzt ist und bei einer vorbestimmten Temperatur pyrotechnisch umsetzt. Der pyrotechnische Anzünder kann beispielsweise als pyrotechnischer Temperatursensor ausgebildet sein. Der pyrotechnische Anzünder kann Pyrotechnikmaterial aufweisen, das bei Erreichen einer pyrotechnikmaterialspezifischen Umsetztemperatur pyrotechnisch umsetzt. Mit anderen Worten setzt der pyrotechnische Anzünder dann pyrotechnisch um, wenn die Temperatur, der er ausgesetzt ist, insbesondere die Temperatur der elektrischen Energiequelle bzw. eine Temperatur in dessen Umgebung, die pyrotechnikmaterialspezifische Umsetztemperatur überschreitet. In Bezug auf das Pyrotechnikmaterial sei auf die vorhergehenden Ausführungen verwiesen.

Des Weiteren umfasst das erfindungsgemäße System ein separates, mit dem Anzünder gekoppeltes und mit der Trenneinrichtung koppelbares pyrotechnisches Fernanzündmittel, das dazu ausgelegt ist, die beim pyrotechnischen Umsetzen des Anzünders frei gewordene Wärme an die pyrotechnische Trenneinrichtung zu übertragen. Das pyrotechnische Fernanzündmittel dient grundsätzlich dazu, die zum Auslösen der pyrotechnischen Trenneinrichtung nötige Initialenergie zur Verfügung zu stellen. Das erfindungsgemäße Fernanzündmittel ermöglicht es daher, die zum Auslösen der pyrotechnischen Trenneinrichtung notwendige Initialenergie in Form von Wärme zwischen zwei örtlich zueinander versetzten Positionen zu übertagen, insbesondere zwischen dem Ort des pyrotechnischen Anzünders, insbesondere einer Messstelle, und dem Ort der pyrotechnischen Trenneinrichtung, insbesondere einer Kappstelle. Beispielsweise ist der pyrotechnische Anzünder an oder zumindest im Bereich der elektrischen Energiequelle angeordnet und die pyrotechnische Trenneinrichtung an einem davon örtlich entfernten Ort im Bereich der zu durchtrennenden elektrischen Leitung. Auf diese Weise kann mithilfe des erfindungsgemäßen Systems unabhängig vom zur Verfügung stehenden Bauraum zuverlässig und energieeffizient ein Elektronikbauteil überwacht werden und bei dessen Überhitzung bzw. bei einer Überhitzung dessen Energiequelle zuverlässig abschalten, um gefährliche Kettenreaktionen auszuschließen.

In einer beispielhaften Ausführung des erfindungsgemäßen Systems weist das Fernanzündmittel pyrotechnisches Material auf, das derart eingestellt und/oder derart ausgewählt ist, dass es sich beim pyrotechnischen Umsetzen des Anzünders pyrotechnisch umsetzt, um die pyrotechnische Trenneinrichtung auszulösen. Das Fernanzündmittel kann beispielsweise als Mittel zum Etablieren einer pyrotechnischen Kettenreaktion eingesetzt werden. In Bezug auf das pyrotechnische Material des Fernanzündmittels kann auf die vorhergehenden Ausführungen verwiesen werden. Der pyrotechnische Anzünder kann unter einer exothermen pyrotechnischen Reaktion pyrotechnisch umsetzen und dabei das pyrotechnische Material des Fernanzündmittels anzünden, sodass sich dieses pyrotechnisch erneut unter einer exothermen chemischen Reaktion umsetzt, sodass die bei der exothermen pyrotechnischen Umsetzung des pyrotechnischen Materials im Fernanzündmittel freigewordene Wärme zur Auslösung der pyrotechnischen Trenneinrichtung, insbesondere zur pyrotechnischen Umsetzung von der pyrotechnischen Trenneinrichtung zugeordnetem Pyrotechnikmaterial, verwendet werden kann. Insofern kommt das erfindungsgemäße System ohne eine elektrische Energieversorgung und/oder elektrische Energieübertagungsmittel, die fehleranfällig sein können, aus. Darüber hinaus zeichnet sich die pyrotechnische Kettenreaktion durch eine extrem schnelle Signalübertagung aus, sodass instantan auf zu hohe Temperaturen der Energiequelle bzw. des zu überwachenden Elektronikbauteils reagiert werden kann.

Gemäß einer weiteren beispielhaften Weiterbildung des erfindungsgemäßen Systems ist das Fernanzündmittel nicht-elektrisch auslösbar. Beispielsweise ist das Fernanzündmittel als Zündschnur oder als Zündschlauch ausgebildet. Für den Fall, dass das Fernanzündmittel als Zündschlauch ausgebildet ist, kann eine Innenseite des Zündschlauchs mit pyrotechnischem Material insbesondere mit einer Menge im Bereich von 5 mg/m Länge des Zündschlauchs bis 100 mg/m Länge, insbesondere im Bereich von 10 mg/m Länge bis 85 mg/m Länge oder im Bereich von 15 mg/m Länge bis 70 mg/m Länge, beschichtet sein. Die hauchdünne Schicht aus pyrotechnischem Material kann dazu eingerichtet sein, extrem schnell umzusetzen und beispielsweise mit einer Geschwindigkeit von ca. 2.000 m/s die heiße Reaktionsfront infolge der exothermen chemischen Reaktion weiterzuleiten. Gemäß einer alternativen Ausführung des Fernanzündmittels als Zündschnur kann ferner ein die Zündschnur umhüllendes Schutzrohr bereitgestellt sein, welches sicherstellt, dass das Abbrennen der Zündschnur keine umliegenden Komponenten beschädigt. Ein weiterer Vorteil der geringen notwendigen Pyrotechnikmaterialmenge beim Fernanzündmittel ist, dass sowohl der Zündschlauch oder Sprengschlauch als auch dessen Umgebung völlig unbeschädigt bleibt. Bei der Wahl der Pyrotechnikmaterialmenge im Zündschlauch ist sicherzustellen, dass die final an die pyrotechnische Trenneinrichtung übergebbare Energiemenge in Form von Wärme ausreichend ist, um die pyrotechnische Trenneinrichtung zu aktivieren, insbesondere das der pyrotechnischen Trenneinrichtung zugeordnete Pyrotechnikmaterial pyrotechnisch umzusetzen.

Gemäß einem weiteren Aspekt der vorliegenden Erfindung, der mit den vorhergehenden Aspekten und beispielhaften Ausführungen kombinierbar ist, ist ein pyrotechnisches Trennsystem umfassend ein gemäß einem der zuvor beschriebenen Aspekte bzw. beispielhaften Ausführungen ausgebildetes System zum Bereitstellen einer vorbestimmten pyrotechnischen Energieabgabe an eine pyrotechnische Trenneinrichtung zum Trennen einer zu einer elektrischen Energiequelle, wie einer Batterie oder einem Akkumulator, zum Abführen und/oder Empfangen elektrischer Energie führenden elektrischen Leitung, wie einem Kabel, einem Draht, einer Leiterbahn oder dergleichen, und eine mit dem Fernanzündmittel gekoppelte pyrotechnische Trenneinrichtung zum Kappen der elektrischen Leitung bereitgestellt.

Die pyrotechnische Trenneinrichtung kann dazu ausgelegt sein, eine elektrische Ladekopplung zwischen einer elektrischen Energiequelle und einer elektrischen Energieversorgung bzw. eine elektrische Entladekopplung zwischen einer vorzugsweise aufladbaren Energiequelle und einem elektrischen Verbraucher zu trennen. Beispielsweise soll mit der erfindungsgemäßen pyrotechnischen Trenneinrichtung verhindert werden, dass an Elektronikgeräten eine Überhitzung insbesondere der Batterien, wie Lithiumionen-Batterien, einhergeht, was zu einer Beschädigung des Elektronikgeräts führen kann. Derartige Batterien besitzen eine Abgabeleistung von deutlich über 1 A, insbesondere bis zu 10 A bzw. 50 A. Die pyrotechnische Trenneinrichtung gemäß der vorliegenden Erfindung kann außerdem zum Trennen einer zu einem Träger für elektronische Bauteile, insbesondere Leiterplatte, Leiterkarte oder Platine, oder darin vorgesehenen elektrisch leitenden Leiterbahn zum Abführen und/oder Empfangen elektrischer Energie eingesetzt werden.

Gemäß einer beispielhaften Weiterbildung des erfindungsgemäßen Trennsystems weist die pyrotechnische Trenneinrichtung ein Gehäuse mit Pyrotechnikmaterial auf, das gegenüber dem Fernanzündmittel derart abgedichtet ist, dass insbesondere ausschließlich beim pyrotechnischen Umsetzen des Anzünders, insbesondere des Fernanzündmittels, die Abdichtung aufgehoben ist. Die Abdichtung kann demnach so eingestellt sein, dass sie insbesondere ausschließlich in Reaktion auf die pyrotechnische Umsetzung des Fernanzündmittels zeitweise aufgehoben ist, sodass die infolge der exothermen Reaktion bei der pyrotechnischen Umsetzung des Fernanzündmittels entstehende Wärme, insbesondere die heiße Reaktionsfront, an der Dichtung vorbei in das Gehäuse der pyrotechnischen Trenneinrichtung gelangen kann, insbesondere um dort die pyrotechnische Umsetzung des der pyrotechnischen Trenneinrichtung zugeordneten Pyrotechnikmaterials auszulösen. Die Abdichtung kann beispielsweise derart ausgebildet sein, dass ein Fluidstrom nur in einer Richtung zugelassen ist. Insbesondere ist ein Fluidstrom vom Gehäuse in das Fernanzündmittel unterbunden. Beispielsweise handelt es sich bei der Abdichtung um eine Rückschlagarmatur, wie beispielsweise ein in die Schließstellung/Abdichtstellung vorgespanntes, insbesondere federvorgespanntes, Schließelement, wie eine Kugel, ein Kegel, eine Klappe oder eine Membran.

Gemäß einer weiteren beispielhaften Weiterbildung des erfindungsgemäßen Trennsystems ist die Abdichtung derart ausgestaltet, dass beim Auslösen der pyrotechnischen Trenneinrichtung die Abdichtung wieder aufgebaut ist, insbesondere ein Fluidfluss vom Gehäuse der pyrotechnischen Trenneinrichtung in Richtung des Fernanzündmittels unterbunden ist. Die Abdichtung kann beispielsweise durch eine Rückschlagarmatur realisiert sein. Dadurch kann vermieden werden, dass der sich infolge der pyrotechnischen Umsetzung des Pyrotechnikmaterials der pyrotechnischen Trenneinrichtung aufbauende hohe Innendruck innerhalb des Gehäuses in die Fernanzündmittel übertragen wird und insbesondere dort Beschädigungen hervorruft.

In einer beispielhaften Ausführung des pyrotechnischen Trennsystems umfasst die pyrotechnische Trenneinrichtung eine Kappmechanik zum Durchtrennen der elektrischen Leitung und einen pyrotechnischen Antrieb zum Betreiben der Kappmechanik, die dem pyrotechnischen Antrieb derart zugeordnet ist, dass bei Aktivierung des pyrotechnischen Antriebs die Kappmechanik angetrieben wird, wobei insbesondere der pyrotechnische Antrieb mit einem sich temperaturabhängig pyrotechnisch umsetzenden Material ausgestattet ist.

Die Kappmechanik kann vorzugsweise ohne Elektrik bzw. Elektronik auskommen und die elektrische Leitung durch Verrichten von mechanischer Arbeit durchtrennen. Des Weiteren kann die pyrotechnische Trenneinrichtung einen pyrotechnischen Antrieb zum Betreiben der Kappmechanik aufweisen. Der pyrotechnische Antrieb kann beispielsweise derart ausgelegt sein, dass die mechanische Arbeit zum Durchtrennen der elektrischen Leitung durch die Kappmechanik unter Ausnutzung des pyrotechnischen Effekts des pyrotechnischen Antriebs erfolgt. In einer beispielhaften Ausführung ist die Kappmechanik dem pyrotechnischen Antrieb derart zugeordnet, dass bei Aktivierung des pyrotechnischen Antriebs die Kappmechanik angetrieben bzw. betrieben wird. Insbesondere trennt die Kappmechanik bei Aktivierung des pyrotechnischen Antriebs die elektrische Leitung. Die pyrotechnische Trenneinrichtung gemäß der vorliegenden Erfindung macht sich demnach den pyrotechnischen Effekt zu Nutze, um der Kappmechanik eine Antriebs- bzw. Betätigungskraft zur Verfügung zu stellen, mittels welcher die Kappmechanik mechanische Arbeit verrichten kann, um die elektrische Leitung zu durchtrennen. Gemäß einer beispielhaften Ausführung ist der pyrotechnische Antrieb direkt mit der Kappmechanik gekoppelt, insbesondere sind keine Kraftübertragungsmittel zwischen pyrotechnischem Antrieb und Kappmechanik angeordnet. Insbesondere kann dadurch der pyrotechnische Antrieb übersetzungsfrei die Kappmechanik betreiben. Gemäß einer alternativen Ausführung kann der pyrotechnische Antrieb mit der Kappmechanik mittels eines Getriebes zum vorzugsweise übersetzungsfreien Übertragen einer von dem pyrotechnischen Antrieb erzeugten Antriebskraft auf die Kappmechanik gekoppelt sein. Beispielsweise kann vorgesehen sein, dass ein Übersetzungsgetriebe zwischen pyrotechnischem Antrieb und Kappmechanik zwischengeschaltet ist, um die von dem pyrotechnischen Antrieb erzeugte Antriebskraft zu erhöhen bzw. zu verringern. Dabei können beliebige Getriebe bzw. Übersetzungsgetriebe Anwendung finden. Der pyrotechnische Antrieb kann ferner eine vorzugsweise druck-, flüssigkeits- und/oder gasdichte Kammer mit pyrotechnischem Material aufweisen. Die Kammer kann allerdings, falls gewünscht, eine definierte, insbesondere semipermeable Gasdurchlässigkeit, vorzugsweise nur nach innen, aufweisen. Die Kammer soll das pyrotechnische Material aufnehmen. Die Wahl des pyrotechnischen Materials bzw. des pyrotechnischen Satzes bzw. der pyrotechnischen Substanz hängt insbesondere vom Anwendungsgebiet (der gewünschten pyrotechnischen Energieumsetzung) sowie von der Dimensionierung der Kammer und der Art der verwendeten Kappmechanik ab. Bei der erfindungsgemäßen pyrotechnischen Trenneinrichtung ist das pyrotechnische Material, das in der Kammer untergebracht ist, dazu ausgelegt und/oder derart ansteuerbar, dass es seine pyrotechnische Wirkung insbesondere erst bei Erreichen eines vorbestimmten Betriebszustands entfaltet. Dabei kann der Betriebszustand ein spezifischer Zustand der Energiequelle und/oder der elektrischen Energieversorgung und/oder des elektrischen Verbrauchers sein. Bei einer bevorzugten Ausführung ist das pyrotechnische Material dazu ausgelegt, erst bei Erreichen des vorbestimmten Betriebszustands umzusetzen, was durch die Wahl des spezifischen Materials des pyrotechnischen Materials eingestellt werden kann. Vorzugsweise ist der festlegbare Auslöseparameter die Temperatur, der das pyrotechnische Material ausgesetzt ist. Alternativ kann die Entfaltung bei dem vorbestimmten Betriebszustand auch durch eine hinzugefügte Steuerung erreicht werden, bei der der Auslöseparameter temperaturunabhängig gewählt ist, beispielsweise durch ein entsprechendes elektrisches Steuersignal, das wiederum von einer Messgröße, wie Temperatur, Druck, Feuchtigkeit, Geschwindigkeit, Beschleunigung, abhängen kann. Ein Beispiel für ein pyrotechnisches Material, das bei Erreichen eines bestimmten thermischen Betriebszustands aktiviert ist, ist das sogenannte pyrotechnische Frühzündmittel. Dabei ist ein von der an dem pyrotechnischen Material herrschenden Temperatur abhängiger Betriebsparameter wesentlich. Insbesondere soll das pyrotechnische Material derart eingestellt sein, dass bei dessen Umsetzung bzw. Zündung eine derart große pyrotechnische Umsetzung stattfindet, welche thermische Energie freisetzt, dass die Kappmechanik die elektrische Leitung kappen kann. Es zeigte sich, dass es mit der erfindungsgemäßen pyrotechnischen Trenneinrichtung möglich ist, eine sofortige elektrische Trennung bei Erreichen ungewollter kritischer Ladevorgänge und/oder Entladevorgänge mit höchster Wahrscheinlichkeit sicherzustellen, unabhängig von dem technischen Einsatzgebiet und/oder dem Gerätetyp, insbesondere beim Einsatz bei Lithiumionen-Batterien mit einer Abgabeleistung von bis zu 50 A. Bei einer bevorzugten Ausführung ist das pyrotechnische Material derart ausgewählt, dass es bei Überschreitung einer bezüglich eines kritischen Betriebszustands definierten Auslösetemperatur von beispielsweise über 50°, 70°, 80°, 90°, 100° oder über 110° auslöst, um die Antriebskraft der Kappmechanik mitzuteilen. Bei einer Weiterbildung der vorliegenden Erfindung hat die Kammer ein Gesamtinnenvolumen, das von einem Kammergehäuse wenigstens teilweise eingeschlossen ist. Von dem Gesamtinnenvolumen nimmt das pyrotechnische Material mehr als 20% oder 30% und nicht mehr als 90% oder 80% oder 70% oder 60% oder 50% ein. Der von dem pyrotechnischen Material freie Volumenbereich kann beispielsweise mit Gas, wie Luft, gefüllt sein. Durch das Volumenverhältnis zwischen der Belegung des pyrotechnischen Materials und dem freien Gasraum in der Kammer kann die Umsetzung des pyrotechnischen Materials eingestellt werden. Zu einem bevorzugten pyrotechnischen Material können folgende Stoffe, Substanzen und Gemische eingesetzt werden, wobei klar ist, dass die erwähnten Einzelstoffe auch in Kombination zueinander oder einzeln verwendet werden können. Beispielsweise nimmt die Kammer die Kappmechanik wenigstens axialabschnittsweise auf. Als Axialrichtung ist dabei die Längserstreckungsrichtung der Kammer und/oder eine Betätigungsrichtung der Kappmechanik zu verstehen, in welcher die Kappmechanik bei Aktivierung des pyrotechnischen Antriebs betrieben wird. Bei einer Weiterbildung führt das Gehäuse bei Aktivierung des pyrotechnischen Antriebs die Kappmechanik, insbesondere wenigstens den in der Kammer aufgenommenen Axialabschnitt der Kappmechanik, druck-, flüssigkeits- und/oder gasdicht gleitend, insbesondere ohne, dass die bei der Umsetzung des pyrotechnischen Antriebs expandierenden Gase die Kammer verlassen. Bei der Ausführung der pyrotechnischen Trenneinrichtung mit einem Getriebe kann die Kammer Teil des Getriebes sein und neben der Beherbergung des pyrotechnischen Materials, welche die pyrotechnische Aktivierung initiiert, auch eine Axialführung für die Kappmechanik bereitstellen, welche infolge der pyrotechnischen Aktivierung des pyrotechnischen Antriebs betrieben, insbesondere angetrieben, wird. Ferner kann die Kappmechanik bei Umsetzung des pyrotechnischen Antriebs eine axiale Relativbewegung bezüglich der Kammer ausführen. Dies bedeutet, dass der pyrotechnische Antrieb bei dessen Aktivierung die Kappmechanik dazu veranlassen kann, eine axiale Relativbewegung auszuführen, um in Richtung der zu trennenden elektrischen Leitung verlagert zu werden, um diese infolge der axialen Relativbewegung zu durchtrennen. Die von dem pyrotechnischen Antrieb erzeugte Antriebskraft wird demnach in eine Bewegung der Kappmechanik umgewandelt, wobei die Kappmechanik eine Bewegungsenergie erfährt, welche zum Durchtrennen der elektrischen Leitung ausreicht. Insbesondere führt die Umsetzung des in der Kammer befindlichen pyrotechnischen Materials zum Betreiben insbesondere Antreiben der Kappmechanik, insbesondere aufgrund einer beim Umsetzen des pyrotechnischen Materials einhergehenden Gasexpansion. Beispielsweise kann die Kappmechanik eine wenigstens axialabschnittsweise in einer mit pyrotechnischem Material belegten Kammer des pyrotechnischen Antriebs angeordnete Betätigungskomponente, wie einen Kolben oder einen Stößel, aufweisen, wobei insbesondere die Kammer gemäß einer der beispielhaften zuvor beschriebenen Ausführungen ausgebildet ist. Vorzugsweise ist die Betätigungskomponente abgedichtet und gleitend innerhalb der Kammer geführt, so dass sichergestellt ist, dass bei Umsetzung des pyrotechnischen Antriebs die bei der Umsetzung des pyrotechnischen Materials einhergehende Gasexpansion nicht zu einem Austreten der Gase aus der Kammer führen kann. Sämtliche Gase sollen innerhalb der Kammer abgeschottet sein. Die Betätigungskomponente kann beispielsweise dazu ausgelegt sein, die bei Aktivierung des pyrotechnischen Antriebs, insbesondere bei Umsetzung des pyrotechnischen Materials, auftretenden Kräfte, wie Antriebskräfte, aufzunehmen und insbesondere der Kappmechanik mitzuteilen. Insbesondere ist die Betätigungskomponente Teil des Getriebes und vorzugsweise unmittelbar zwischen dem pyrotechnischen Antrieb und einer wirksamen Kappkomponente der Kappmechanik derart zwischengeschaltet, dass die Antriebskraft mittels der Betätigungskomponente in eine Kappkraft umgewandelt wird. Die Betätigungskomponente kann derart in der Kammer angeordnet und/oder dem pyrotechnischen Antrieb derart zugeordnet sein, dass bei Aktivierung des pyrotechnischen Antriebs die Betätigungskomponente eine Axialbewegung der Kappmechanik relativ zur Kammer veranlasst. Dadurch wird eine Vorschubkraft der Kappmechanik mitgeteilt, aufgrund welcher die Kappmechanik beschleunigt wird und die elektrische Leitung gekappt wird. Die Kappmechanik kann ein Kappelement, wie eine vorzugsweise zylindrische Ramme, eine Klinge, einen Dorn oder eine Pfeilspitze, zum Durchtrennen der elektrischen Leitung aufweisen. Die zylindrische Ramme kann beispielsweise als Vollzylinder realisiert sein. Beispielhafte Durchmesserabmessungen der zylindrischen Ramme, liegen im Bereich von 0,2 mm bis 1 mm, um eine zuverlässige Durchtrennung der elektrischen Leitung zu gewährleisten. Gemäß einer beispielhaften Weiterbildung ist das Kappelement der Betätigungskomponente derart zugeordnet, dass das Kappelement bei Aktivierung des pyrotechnischen Antriebs durch die Betätigungskomponente betätigt, insbesondere betrieben, vorzugsweise angetrieben, wird, wodurch insbesondere eine Axialbewegung des Kappelements relativ zu dem Kappmechanikgehäuse veranlasst wird. Beispielsweise ist das Kappelement an einer dem pyrotechnischen Antrieb abgewandten Seite, und damit an der der elektrischen Leitung zugewandten Seite, der Kappmechanik vorgesehen. Je nach Ausführung des Kappelements durchschneidet, spaltet oder zerquetscht das Kappelement die elektrische Leitung bei Aktivierung des pyrotechnischen Antriebs, wobei jedenfalls sichergestellt ist, dass ein Abführen und/oder Empfangen von elektrischer Energie mittels der elektrischen Leitung unterbrochen ist. Ein Gehäuse der Kappmechanik, das insbesondere gemäß einer der beispielhaften zuvor beschriebenen Ausführungen ausgestaltet ist, kann einen Durchgangskanal zum Hindurchführen der elektrischen Leitung aufweisen, die zu trennen ist. Die Kappmechanik, insbesondere die Betätigungskomponente und/oder das Kappelement, ist/sind derart bezüglich des Durchgangskanals positioniert, dass in einem deaktivierten Zustand des pyrotechnischen Antriebs die elektrische Leitung ungehindert durch den Durchgangskanal hindurchführbar ist und in einem aktivierten Zustand des pyrotechnischen Antriebs die Kappmechanik derart in den Durchgangskanal verlagert ist, dass die Kappmechanik die elektrische Leitung kappt. Der deaktivierte Zustand des pyrotechnischen Antriebs ist dabei als derjenige Zustand zu betrachten, in dem die elektrische Energiequelle Energie mittels der elektrischen Leitung abführen und/oder empfangen kann. In dem aktivierten Zustand des pyrotechnischen Antriebs hat dessen Aktivierung eine Initiierung der pyrotechnischen Trenneinrichtung veranlasst, bei welcher die Kappmechanik, insbesondere das Kappelement, eine Axialbewegung aufgezwungen bekommt, um die elektrische Leitung zu durchschneiden, zu spalten oder zu zerquetschen. Alternativ oder zusätzlich kann ein Gehäuse der Kappmechanik einen Durchgangskanal zum Hindurchführen der elektrischen Leitung aufweisen und die durch die Aktivierung des pyrotechnischen Antriebs, insbesondere pyrotechnische Umsetzung des pyrotechnischen Materials, initiierte Axialbewegung der Kappmechanik, insbesondere der Betätigungskomponente und/oder des Kappelements, kann derart eingestellt sein, dass in einem deaktivierten Zustand die elektrische Leitung ungehindert durch den Durchgangskanal hindurchführbar ist und in einem aktivierten Zustand die Kappmechanik derart in Axialrichtung verlagert ist, dass die Kappmechanik, insbesondere das Kappelement, die elektrische Leitung kappt, insbesondere durchschneidet, spaltet oder zerquetscht. Als Einstellungsparameter können dabei beispielsweise eine Drahtabmessung, wie eine Drahtdicke, ein zu überbrückender Abstand zwischen Kappmechanik und elektrischer Leitung in dem deaktivierten Zustand des pyrotechnischen Antriebs sowie im Allgemeinen eine Widerstandskraft der elektrischen Leitung gegen ein Kappen berücksichtigt werden. Der Durchgangskanal kann derart dimensioniert und/oder die axiale Relativbewegung der Kappmechanik kann derart auf eine Durchgangskanalabmessung abgestimmt sein, dass eine Innenwand des Durchgangskanals beim Kappen der elektrischen Leitung als Widerlager wirkt. Es ist beispielsweise vorgesehen, dass die Kappmechanik nach dem Kappen der elektrischen Leitung gegen die Durchgangskanalinnenwand anschlägt, wodurch insbesondere sichergestellt ist, dass die elektrische Leitung der Kappmechanik nicht ausweichen kann, wodurch ein Durchtrennen der elektrischen Leitung verhindert werden könnte. Der pyrotechnische Antrieb kann mit einem sich temperaturabhängig umsetzenden, pyrotechnischen Material ausgestattet sein, das insbesondere in einer Kammer des pyrotechnischen Antriebs angeordnet ist. Die Kammer und das pyrotechnische Material können beispielsweise analog zu wenigstens einer der zuvor beschriebenen beispielhaften Ausführungsformen ausgebildet sein. Das pyrotechnische Material kann sich bei Aktivierung des pyrotechnischen Antriebs pyrotechnisch umsetzen, insbesondere zünden. Bei dessen Umsetzung erzeugt das pyrotechnische Material eine thermische und/oder mechanische Wirkung, wobei Wärme und/oder Gasdruck resultiert, was eine Axialbewegung der Kappmechanik initiiert. Insbesondere überschreitet das pyrotechnische Material eine vorbestimmte Aktivierungstemperatur zur Aktivierung des pyrotechnischen Antriebs.

In einer weiteren beispielhaften Ausführung des pyrotechnischen Trennsystems ist die Kopplung von Fernanzündmittel und pyrotechnischer Trenneinrichtung und/oder die Kopplung von Fernanzündmittel und Anzündmittel durch eine kraftschlüssige, stoffschlüssige und/oder formschlüssige Verbindungstechnologie realisiert. Beispielsweise kommt eine Passverzahnung, Passfedern oder Zahnkupplung etc., eine Schraubverbindung, Keilen oder Stecken etc. und/oder Löten, Schweißen oder Kleben etc. infrage.

Gemäß einem weiteren Aspekt der vorliegenden Erfindung, der mit den vorhergehenden Aspekten und beispielhaften Ausführungen kombinierbar ist, ist ein pyrotechnisches Fernanzündesystem bereitgestellt. Das Fernanzündesystem umfasst mehrere pyrotechnische Temperatursensoren, die einer elektrischen Energiequelle, wie einer Batterie oder einem Akkumulator, oder mehreren elektrischen Energiequellen, die an eine gemeinsame energieführende elektrische Leitung angeschlossen sind, zugeordnet sind. Das Fernanzündesystem umfasst ferner eine räumlich von den pyrotechnischen Temperatursensoren getrennte pyrotechnische Trenneinrichtung, die eine zur elektrischen Energiequelle zum Abführen und/oder Empfangen einer energieführenden elektrischen Leitung, wie einem Kabel, einem Draht, einer Leiterbahn oder dergleichen zugeordnet ist.

Der pyrotechnische Temperatursensor kann beispielsweise entsprechend des zuvor beschriebenen pyrotechnischen Anzünders ausgebildet sein.

Gemäß dem weiteren erfindungsgemäßen Aspekt ist die pyrotechnische Trenneinrichtung durch Fernanzündmittel mit den pyrotechnischen Temperatursensoren derart gekoppelt, dass die pyrotechnische Trenneinrichtung dann von einem der Fernanzündmittel aktiviert wird, wenn der dem Fernanzündmittel zugeordnete pyrotechnische Temperatursensor auslöst. Beim Auslösen des pyrotechnischen Temperatursensors kann unter einer exothermen chemischen Reaktion eine pyrotechnische Umsetzung einhergehen, die beispielsweise temperaturabhängig initiiert wird. Diesbezüglich kann auf die vorhergehenden Ausführungen zum pyrotechnischen Anzünder verwiesen werden. Das pyrotechnische Fernanzündesystem ermöglicht es demnach, dass unterschiedliche elektrische und elektronische Komponenten überwacht werden können und separat bei deren individueller Überhitzung extrem schnell abgeschaltet werden, um Kettenreaktionen und/oder Beschädigungen benachbarter Komponenten zu unterbinden. Ein Vorteil des erfindungsgemäßen Fernanzündesystems besteht unter anderem darin, dass es mit nur einer einzigen pyrotechnischen Trenneinrichtung auskommt und über die Fernanzündmittel flexibel verschiedene, an unterschiedlichen Orten angeordnete, zu überwachende elektronische Komponenten überwachen und sensieren kann.

Gemäß einer beispielhaften Ausführung des erfindungsgemäßen Fernanzündesystems umfasst das Fernanzündesystem wenigstens ein erfindungsgemäß ausgebildetes System zum Bereitstellen einer pyrotechnischen Energieabgabe und/oder ein erfindungsgemäß ausgebildetes pyrotechnisches Trennsystem.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine schematische Ansicht einer beispielhaften Ausführung eines erfindungsgemäßen pyrotechnischen Fernanzündesystems; und
- Figur 2: eine schematische Ansicht einer beispielhaften Ausführung eines erfindungsgemäßen pyrotechnischen Trennsystems.

In der folgenden Beschreibung beispielhafter Ausführungen der Erfindung ist ein erfindungsgemäßes System zum Bereitstellen einer vorbestimmten pyrotechnischen Energieabgabe an eine pyrotechnische Trenneinrichtung im Allgemeinen mit der Bezugsziffer 1 versehen. Ein erfindungsgemäßes pyrotechnisches Trennsystem, das ein erfindungsgemäßes System 1 und eine pyrotechnische Trenneinrichtung umfasst, ist im Allgemeinen mit der Bezugsziffer 10 versehen und ein erfindungsgemäßes pyrotechnisches Fernanzündesystem, das mehrere pyrotechnische Temperatursensoren und eine Trenneinrichtung umfasst, ist im Allgemeinen mit der Bezugsziffer 100 versehen.

Ein erfindungsgemäßes System 1 dient zum Bereitstellen einer vorbestimmten pyrotechnischen Energieabgabe, vorzugsweise von wenigstens 0,5 J, an eine pyrotechnische Trenneinrichtung, die im Allgemeinen mit der Bezugsziffer 3 versehen ist. Die Trenneinrichtung 3 dient zum Trennen einer zu einer elektrischen Energiequelle (nicht dargestellt), wie einer Batterie oder einem Akkumulator, zum Abführen und/oder Empfangen elektrischer Energie führenden elektrischen Leitung 5, wie einem Kabel, einem Draht, einer Leiterbahn oder dergleichen. Die pyrotechnische Trenneinrichtung 3 ist dazu ausgelegt, beispielsweise eine elektrische Ladekopplung bzw. eine elektrische Entladekopplung, die über eine elektrische Leitung 5 übertragen wird, zu trennen. Die notwendige Energie zum Durchtrennen der elektrischen Leitung 5, wird mittels des erfindungsgemäßen Systems 1 bereitgestellt.

Ein erfindungsgemäßes System 1 weist die folgenden Hauptkomponenten auf: einen pyrotechnischen Anzünder 7; und ein mit dem Anzünder 7 gekoppeltes und mit der Trenneinrichtung 3 koppelbares pyrotechnisches Fernanzündmittel 9. Erfindungsgemäß ist der Anzünder 7 der Temperatur der elektrischen Energiequelle ausgesetzt und setzt bei einer vorbestimmten Temperatur pyrotechnisch um. Das Fernanzündmittel 9 ist dazu ausgelegt, die beim pyrotechnischen Umsetzen des Anzünders 7 frei gewordene Wärme an die pyrotechnische Trenneinrichtung 3 zu übertragen, um die pyrotechnische Trenneinrichtung 3 über eine Fernaktivierung auszulösen.

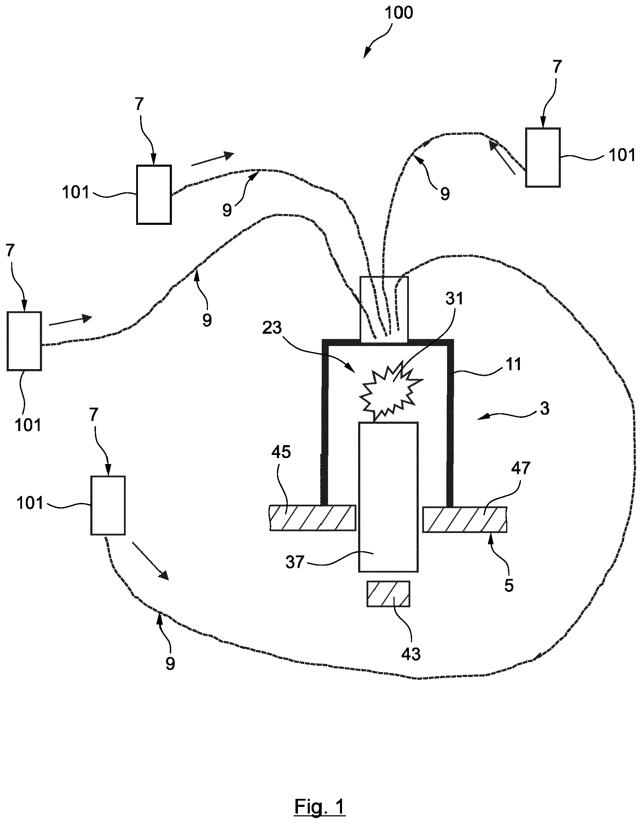

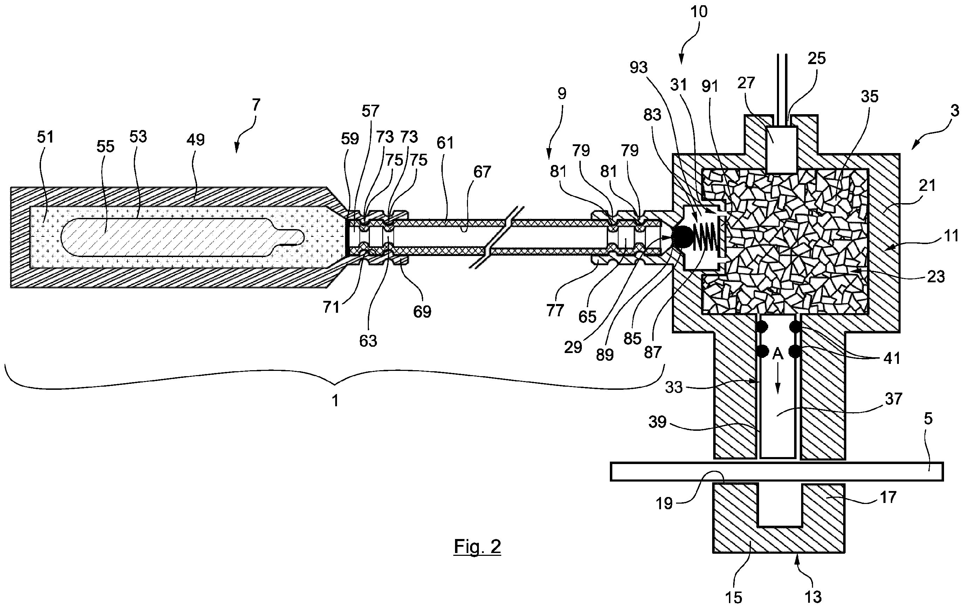

Anhand der Figuren 1 und 2 werden im Folgenden der Aufbau und die Funktionsweise der einzelnen Komponenten eines erfindungsgemäßen Systems 1 und einer erfindungsgemäßen Trenneinrichtung 3 im Detail erläutert, wobei in Figur 1 der Zustand der pyrotechnischen Trenneinrichtung 3 nach deren Aktivierung bzw. Auslösung und in Figur 2 der Zustand der pyrotechnischen Trenneinrichtung 3 vor deren Aktivierung gezeigt ist.

Figur 1 zeigt eine beispielhafte Ausführung eines erfindungsgemäßen Fernanzündesystems 100 mit vier pyrotechnischen Temperatursensoren 101. Die Temperatursensoren 101 sind jeweils einer elektrischen Energiequelle zugeordnet, wobei alle Energiequellen an eine gemeinsame Leitung 5 angeschlossen sind. Die Temperatursensoren 101 sind jeweils über ein separates Fernanzündmittel 9 mit einer einzigen pyrotechnischen Trenneinrichtung 3 verbunden bzw. gekoppelt, die somit räumlich getrennt von den Temperatursensoren 101 beliebig angeordnet sein kann. Die Temperatursensoren 101 können jeweils als erfindungsgemäßer pyrotechnischer Auslöser 7 betrachtet werden. Somit umfasst das Fernanzündesystem 100 in Figur 1 vier separate erfindungsgemäße Systeme 1, die mit einer einzigen Trenneinrichtung 3 verbunden sind und diese jeweils einzeln aktivieren können, wenn der entsprechende Temperatursensor 101 auslöst, weil die Temperatur der entsprechenden Energiequelle eine vorbestimmte Temperaturschwelle überschreitet.

Figur 2 zeigt eine beispielhafte Ausführung eines pyrotechnischen Trennsystems 10, bei dem eine erfindungsgemäßes System 1 mit einer Trenneinrichtung 3 gekoppelt ist und die einzelnen Komponenten des Systems 1 und der Trenneinrichtung 3 detailliert dargestellt sind.

Die pyrotechnische Trenneinrichtung 3 umfasst ein längliches, hohlzylindrisches Gehäuse 11, das in Figur 1 nur schematisch und in Figur 2 im Detail dargestellt ist. In der Ausführung in Figur 2 ist das Gehäuse 11 zu einer Längsseite 13 hin geschlossen. An der Längsseite 13 ist eine im Wesentlichen ebene Bodenwandung 15 vorgesehen. An einem an die Bodenwandung 15 anschließenden distalen Randbereich 17 besitzt das Gehäuse 11 einen im Wesentlichen senkrecht zur Axialerstreckung des Gehäuses 11 orientierten Durchgangskanal 19, durch den die elektrische Leitung 5 hindurchgeführt ist. Ausgehend von dem distalen Randbereich 17 weist das Gehäuse 11 zunächst einen konstanten Durchmesser auf, bis sich das Gehäuse 11 in einem daran anschließenden Abschnitt 21 aufweitet, so dass im Inneren des Gehäuses 11 eine Kammer 23 gebildet ist. In der Ausführung in Figur 2 weist das Gehäuse 11 im Bereich der Kammer 23 zwei Öffnungen auf. Eine Öffnung 25 dient dazu, ein Anzündhütchen 27 aufzunehmen, dass nach dem Einsetzen von dem Gehäuse 11 umschlossen ist und die Öffnung 25 vollständig verschließt. Eine weitere Öffnung 29 dient dazu, die Trenneinrichtung 3 mit einem erfindungsgemäßen System 1 zu verbinden bzw. zu koppeln, was später im Detail erläutert wird.

Die Trenneinrichtung 3 umfasst außerdem einen pyrotechnischen Antrieb 31 und eine in Axialrichtung A innerhalb des Gehäuses 11 beweglich angeordnete Kappmechanik 33 zum Durchtrennen der Leitung 5. Der pyrotechnische Antrieb 31 liefert die mechanische Arbeit, die zum Durchtrennen der elektrischen Leitung 5 notwendig ist und betreibt somit die Kappmechanik 33, wobei sich der pyrotechnische Antrieb 31 den pyrotechnischen Effekt zunutze macht. Der pyrotechnische Antrieb 31 umfasst pyrotechnisches Material 35, das in der Kammer 23 angeordnet ist und dazu ausgelegt ist, sich bei Überschreitung einer vorbestimmten Umgebungstemperatur pyrotechnisch umzusetzen. Die pyrotechnische Umsetzung des pyrotechnischen Materials 35 hat im Allgemeinen eine Gasexpansion zur Folge, aufgrund welcher der Druck innerhalb des Gehäuses 11 bzw. der Kammer 23 erheblich ansteigt, sodass eine Kraft auf die Kappmechanik 33 ausgeübt wird, die sich in Folge der Gasexpansion in Axialrichtung A relativ zu dem Gehäuse 11 bewegt und auf diese Weise die elektrische Leitung 5 durchtrennt. Die Kappmechanik 33 ist in den Figuren 1 und 2 als zylindrischer Kolben 37 ausgebildet, der bei einer Axialbewegung von dem Gehäuse 11 bzw. einer Führung 39 des Gehäuses 11 geführt wird. Zur Abdichtung der Kammer 23 gegenüber der Führung 39 für die Kappmechanik 33, sind in der Ausführung in Figur 2 zwei Dichtringe 41 zwischen dem Gehäuse 11 und dem Kolben 37 vorgesehen. Es sei jedoch klar, dass jede denkbare Möglichkeit der Abdichtung zwischen Gehäuse 11 und Kolben 37 vorgesehen sein kann. Zur Abdichtung der Öffnung 29 im Gehäuse 11 ist eine Rückschlagarmatur 83 in die Öffnung 29 eingesetzt, die später im Detail erläutert wird.

Wie in Figur 1 abgebildet ist, durchtrennt die Kappmechanik 33 die elektrische Leitung 5 dadurch, dass ein Leitungsabschnitt 43 von der restlichen Leitung 5 abgetrennt wird und in den distalen Randbereich 17 des Gehäuses 11 verschoben wird (in Figur 1 nicht dargestellt). Ist die Kappmechanik 33 aus einem elektrisch nichtleitenden Material, wie Kunststoff, hergestellt, fungiert die Kappmechanik 33 nach dem Durchtrennen der Leitung 5 als Art Isolator zwischen den einander zugewandten elektrischen Leitungsenden 45, 47.

Alternativ zu einer thermischen Aktivierung durch eine bestimmte Umgebungstemperatur kann der pyrotechnische Antrieb 31 bzw. das Anzünden des pyrotechnischen Materials 35 durch das Anzündhütchen 27 initiiert werden.

Der pyrotechnische Auslöser 7 umfasst ein hohlzylindrisches Gehäuse 49, das mit einem Reaktionspartnerstoff 51, der beispielsweise Kaliumpermanganat, Wasser und/oder Methanol umfassen kann, gefüllt ist. In dem Gehäuse 49 ist außerdem eine Ampulle 53, beispielsweise aus Glas, Kunststoff oder Metall, insbesondere einer Metall-Legierung, wie einer Roseschen Legierung, zum Aufnehmen eines, vorzugsweise chemische Energie beinhaltenden, Reaktionsstoffs 55 angeordnet. Beispielsweise umfasst der Reaktionsstoff 55 Glycerin, Zink-Pulver, Ammoniumnitrat, Ammoniumchlorid und/oder Lithium-Aluminium-Hydrid. Bei Überschreiten einer vorbestimmten Temperatur zerbricht die Ampulle 53 oder zerschmilzt wenigstens teilweise, sodass eine Vermengung von Reaktionsstoff 55 und Reaktionspartnerstoff 51 einhergeht. Der Reaktionsstoff 55 und der Reaktionspartnerstoff 51 sind derart bezüglich einander ausgelegt, dass bei einer Vermengung der beiden Stoffe eine exotherme chemische Reaktion ausgelöst wird.

Alternativ zum Reaktionspartnerstoff 51 und der mit dem Reaktionsstoff 55 gefüllten Ampulle 53 kann in dem Gehäuse 49 des Auslösers 7 auch nur ein pyrotechnisches Material enthalten sein, das bei einer vorbestimmten Temperatur zündet.

Das Gehäuse 49 des pyrotechnischen Auslösers 7 weist eine Öffnung 57 auf, über die das Fernanzündmittel 9 mit dem pyrotechnischen Auslöser 7 verbunden ist. Um zu verhindern, dass der Reaktionspartnerstoff 51 vor dem Aktivieren des pyrotechnischen Auslösers 7 aus dem Gehäuse 49 austritt, ist die Öffnung 57 mit einer abdichtenden Metallfolie 59 verschlossen.

Erfindungsgemäß ist der pyrotechnische Auslöser 7 in der Nähe einer zu überwachenden elektrischen Energiequelle angeordnet, so dass er der Temperatur der elektrischen Energiequelle ausgesetzt ist und die Ampulle 53 zerbricht, wenn die Energiequelle überhitzt und eine vorbestimmte Temperaturschwelle überschreitet.

Das Fernanzündmittel 9 ist in der Ausführung in Figur 2 als Zündschlauch 61 ausgebildet, der mit einem Ende 63 mit dem elektrischen Auslöser 7 und mit dem anderen Ende 65 mit der pyrotechnischen Trenneinrichtung 3 verbunden bzw. gekoppelt ist. Der Zündschlauch 61 kann beispielsweise aus mehreren Lagen verschiedener Kunststoffe bestehen und einen Außendurchmesser von etwa 3 bis 5 mm aufweisen. An einer Innenseite 67 des Zündschlauchs 61 ist der Zündschlauch 61 mit pyrotechnischem Material beschichtet (in Figur 2 nicht dargestellt). Beispielsweise kann die Innenseite 67 mit einer Menge an pyrotechnischem Material im Bereich von 5 mg/m Länge bis 100 mg/m Länge, insbesondere im Bereich von 10 mg/m Länge bis 85 mg/m Länge oder im Bereich von 15 mg/m Länge bis 70 mg/m Länge, beschichtet sein. Alternativ zu dem Zündschlauch 61 ist es auch denkbar, eine Zündschnur zu verwenden, die zum Schutz der umliegenden Komponenten von einem Metallrohr umgeben ist.

Die Verbindung zwischen dem Auslöser 7 und dem Zündschlauch 61 sowie dem Zündschlauch 61 und der Trenneinrichtung 3 ist in der Ausführung in Figur 2 gleich ausgebildet. Es ist jedoch auch denkbar, dass die Verbindungen unterschiedlich ausgebildet sind. Das Gehäuse 49 des Auslösers 7 weist um die Öffnung 57 herum eine hohlzylindrische Aufnahme 69 auf, in die das Ende 63 des Zündschlauchs 61 eingeschoben wird, um den Zündschlauch 61 mit dem Auslöser 7 zu koppeln. Zur Befestigung des Zündschlauchs 61 in der Aufnahme 69 weist die Aufnahme 69 an einer Innenseite 71 zwei umlaufende Vorsprünge 73 auf, die in zwei daran formangepasste umlaufende Nuten 75 am Zündschlauch 61 eingreifen und diesen somit formschlüssig in der Aufnahme 69 halten. Die Trenneinrichtung 3 weist um die Öffnung 29 herum ebenfalls eine hohlzylindrische Aufnahme 77 auf, in die das andere Ende 65 des Zündschlauchs 61 eingeschoben wird, um den Zündschlauch 61 mit der Trenneinrichtung 3 zu koppeln. Die Aufnahme 77 weist ebenfalls zwei umlaufende Vorsprünge 79 und der Zündschlauch 61 am Ende 65 zwei daran formangepasste umlaufende Nuten 81 auf.

In der Aufnahme 77 der Trenneinrichtung 3 ist zur Abdichtung zwischen dem Zündschlauch 61 und der Trenneinrichtung 3 eine Rückschlagarmatur 83 angeordnet. Die Rückschlagarmatur 83 umfasst eine Kugel 85, die durch eine Feder 87 vorgespannt ist und so von innerhalb des Gehäuses 11 nach außen gegen eine Engstelle 89 der Aufnahme 77 gedrückt wird. Die Feder 87 stützt sich in der Ausführung in Figur 2 gegen eine Wand 91 im Inneren des Gehäuses 11 ab, die eine Kammer 93 von der Kammer 23 abtrennt in der die Rückschlagarmatur 83 angeordnet ist. Die Rückschlagarmatur 83 verhindert, dass beim Auslösen des pyrotechnischen Antriebs 31 der Trenneinrichtung 3 eine Übertagung des entstehenden hohen Innendrucks auf den Zündschlauch 61 entsteht und stellt somit sicher, dass die gesamte durch den pyrotechnischen Antrieb 31 erzeugte Energie auf die Kappmechanik 33 übertragen wird und dass umliegende Komponenten nicht durch den hohen Innendruck beschädigt werden.

In Bezug auf die beispielhaften, in den Figuren 1 und 2 dargestellten Ausführungsformen ist anzumerken, dass die pyrotechnische Trenneinrichtung 3, der pyrotechnische Antrieb 31 und das System 1 in deren Abmessungen skalierbar sind, vorzugsweise um unterschiedlich dimensionierte (elektrische) Leitungen 5 zu kappen bzw. unterschiedlich große pyrotechnische Energieabgabemengen bereitzustellen. Des Weiteren ist auch deren äußere Form, insbesondere Querschnittsabmessung, nicht auf eine bestimmte Form und/oder Abmessung beschränkt, sondern kann je nach Anwendungsfall bzw. Einbausituation beispielsweise der pyrotechnischen Trenneinrichtung 3 in bzw. an einem nicht dargestellten Elektrogerät angepasst werden. Der Durchgangskanal 19 ist derart zu bemessen und dabei an die äußeren Abmessungen der elektrischen Leitung 5 anzupassen, dass die elektrische Leitung 5 durch den Durchgangskanal 19 hindurchgeführt werden kann.

Figur 2 zeigt das erfindungsgemäße pyrotechnische Trennsystem 10 in einem Ausgangszustand, in dem die zu überwachende elektrische Energiequelle Normaltemperatur aufweist. Wenn die Energiequelle überhitzt und die Temperatur der Energiequelle eine vorbestimmte Temperaturschwelle überschreitet, wird die pyrotechnische Trenneinrichtung 3 durch das erfindungsgemäße System 1 fernaktiviert, um die Leitung 5 an einer von der Energiequelle örtlich entfernten Stelle zu durchtrennen, was im Folgenden im Detail erläutert wird.

Wenn die von dem pyrotechnischen Auslöser 7 erfasste Temperatur der elektrischen Energiequelle die vorbestimmte Temperaturschwelle überschreitet, wird eine nicht-elektrische, rein pyrotechnische Kettenreaktion gestartet, um die Trenneinrichtung 3 fern zu aktivieren. Beim Überschreiten der vorbestimmten Temperaturschwelle zerbricht die Ampulle 53 des pyrotechnischen Auslösers 7, so dass durch das Vermischen des Reaktionspartnerstoffs 55 und des Reaktionsstoff 51 innerhalb des Gehäuses 49 des Auslösers 7 eine exotherme chemische Initialreaktion entsteht, durch die eine pyrotechnische Initialumsetzung erfolgt.

Durch die exotherme chemische Initialreaktion wird die Metallfolie 59 durchtrennt, die die Öffnung 57 des Auslösers 7 verschließt, so dass die pyrotechnische Initialumsetzung unter einer exothermen chemischen Folgereaktion eine pyrotechnische Übertragungsumsetzung in dem Zündschlauch 61 bewirkt. Durch das pyrotechnische Material an der Innenseite 67 des Zündschlauchs 61 wird die Übertragungsumsetzung mit einer Geschwindigkeit von etwa 2000 m/s von dem mit dem Auslöser 7 verbundenen Ende 63 des Zündschlauchs 61 zu dem mit der Trenneinrichtung 3 verbundenen Ende 65 des Zündschlauchs 61 übertragen.

Die pyrotechnische Übertragungsumsetzung bewirkt am Ende 65 des Zündschlauchs 61 eine pyrotechnische Anzündumsetzung in der Trenneinrichtung 3. Die Übertragungsumsetzung im Sprengstoffschlauch 61 öffnet die Rückschlagarmatur 83, indem sie die Kugel 85 entgegen der Kraft der Feder 87 ins Innere des Gehäuses 11 drückt, so dass eine Flamme durch die Öffnung 29 des Gehäuses 11 in die Kammer 23 gelangt, die dort ein Anzünden des in der Kammer 23 angeordneten pyrotechnischen Materials 35 bewirkt. Nach der Übertagungsumsetzung drückt die Feder 87 die Kugel 85 wieder in ihre ursprüngliche Position zurück, so dass die Kammer 23 wieder nach außen abgedichtet ist. Die Abdichtung der Kammer 23 wird somit ausschließlich beim pyrotechnischen Umsetzen des Zündschlauchs 61 zeitweise aufgehoben.

Das Anzünden des pyrotechnischem Materials 35 in der Kammer 23 löst die Trenneinrichtung 3 aus und bewegt die Kappmechanik 33 in Axialrichtung A, so dass die Kappmechanik 33 die Leitung 5 durchtrennt.

Das erfindungsgemäße System 1 ermöglicht es so, möglicherweise überhitzte Energiequellen, die beispielsweise in Elektronikkomponenten verbaut sind, zu überwachen und auch dann zuverlässig bei deren Überhitzung von der Energieversorgung abzutrennen, wenn die elektrische Leitung 5 der entsprechenden Energiequelle beispielsweise aus bauraumtechnischen Gründen nicht unmittelbar an der Energiequelle selbst bzw. am Ort der Temperaturerfassung zugänglich ist. Insofern ist es mit dem erfindungsgemäßen System 1 möglich, unabhängig vom zur Verfügung stehenden Bauraum und den bauraumtechnischen Gegebenheiten zuverlässig Energiequellen und/oder Elektrogeräte bei einer Überhitzung zuverlässig abzuschalten.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: System
- 10: pyrotechnisches Trennsystem
- 100: pyrotechnisches Fernzündesystem
- 3: pyrotechnische Trenneinrichtung
- 5: Leitung
- 7: pyrotechnischer Anzünder
- 9: pyrotechnisches Fernanzündmittel
- 11: Gehäuse
- 13: Gehäuselängsseite
- 15: Bodenwandung
- 17: distaler Randbereich
- 19: Durchgangskanal
- 21: Gehäuseabschnitt
- 23: Kammer
- 25: Öffnung
- 27: Anzündhütchen
- 29: Öffnung
- 31: pyrotechnischer Antrieb
- 33: Kappmechanik
- 35: pyrotechnisches Material
- 37: Kolben
- 39: Führung
- 41: Dichtring
- 43: Leitungsabschnitt
- 45, 47: Leitungsende
- 49: Gehäuse
- 51: Reaktionspartnerstoff
- 53: Ampulle
- 55: Reaktionsstoff
- 57: Öffnung
- 59: Metallfolie
- 61: Zündschlauch
- 63, 65: Zündschlauchende
- 67: Zündschlauchinnenseite
- 69: hohlzylindrische Aufnahme
- 71: Aufnahmeinnenseite
- 73: umlaufender Vorsprung
- 75: umlaufende Nut
- 77: hohlzylindrische Aufnahme
- 79: umlaufender Vorsprung
- 8₁: umlaufende Nut
- 83: Rückschlagarmatur
- 85: Kugel
- 87: Feder
- 89: Engstelle
- 91: Wand
- 93: Kammer
- 101: pyrotechnischer Temperatursensor

## Patentansprüche

1. Verfahren zum Bereitstellen einer vorbestimmten pyrotechnischen Energieabgabe an eine pyrotechnische Trenneinrichtung (3) zum Trennen einer zu einer elektrischen Energiequelle, wie einer Batterie oder einem Akkumulator, zum Abführen und/oder Empfangen elektrischer Energie führenden elektrischen Leitung (5), wie einem Kabel, einem Draht, einer Leiterbahn oder dergleichen, bei dem: eine Temperatur der elektrischen Energiequelle oder in dessen Nähe erfasst wird; und, wenn die erfasste Temperatur eine vorbestimmte Temperaturschwelle überschreitet, die pyrotechnische Trenneinrichtung (3) fernaktiviert wird, um die elektrische Leitung (5) an einer von der elektrischen Energiequelle örtlich entfernten Stelle zu durchtrennen.

2. Verfahren nach Anspruch 1, bei dem die Fernaktivierung durch eine insbesondere nicht-elektrische pyrotechnische Kettenreaktion erfolgt.

3. Verfahren nach Anspruch 1 oder 2, bei dem, wenn die erfasste Temperatur eine vorbestimmte Temperaturschwelle überschreitet, unter einer exothermen chemischen Initialreaktion eine pyrotechnische Initialumsetzung erfolgt.

4. Verfahren nach Anspruch 3, bei dem die pyrotechnische Initialumsetzung unter einer exothermen chemischen Folgereaktion eine pyrotechnische Übertragungsumsetzung bewirkt.

5. Verfahren nach Anspruch 4, bei dem die pyrotechnische Übertragungsumsetzung zum Auslösen der pyrotechnischen Trenneinrichtung (3) eine pyrotechnische Anzündumsetzung der pyrotechnischen Trenneinrichtung (3) bewirkt.

6. System (1) zum Bereitstellen einer vorbestimmten pyrotechnischen Energieabgabe an eine pyrotechnische Trenneinrichtung (3) zum Trennen einer zu einer elektrischen Energiequelle, wie einer Batterie oder einem Akkumulator, zum Abführen und/oder Empfangen elektrischer Energie führenden elektrischen Leitung (5), wie einem Kabel, einem Draht, einer Leiterbahn oder dergleichen, umfassend einen pyrotechnischen Anzünder (7), der der Temperatur der elektrischen Energiequelle ausgesetzt ist und bei einer vorbestimmten Temperatur pyrotechnisch umsetzt, und ein separates, mit dem Anzünder (7) gekoppeltes und mit der Trenneinrichtung (3) koppelbares pyrotechnisches Fernanzündmittel (9), das dazu ausgelegt ist, die beim pyrotechnischen Umsetzen des Anzünders (7) frei gewordene Wärme an die pyrotechnische Trenneinrichtung (3) zu übertragen.

7. System (1) nach Anspruch 6, wobei das Fernanzündmittel (9) pyrotechnisches Material aufweist, das derart eingestellt ist, dass es sich beim pyrotechnischen Umsetzen des Anzünders (7) pyrotechnisch umsetzt, um die pyrotechnische Trenneinrichtung (3) auszulösen.

8. System (1) nach Anspruch 7, wobei das Fernanzündmittel (9) nicht-elektrisch auslösbar ist, insbesondere als Zündschnur oder als Zündschlauch (61) ausgebildet ist, wobei insbesondere eine Innenseite (67) des Zündschlauchs (61) mit pyrotechnischem Material insbesondere mit einer Menge im Bereich von 5 mg/m Länge bis 100 mg/m Länge, insbesondere im Bereich von 10 mg/m Länge bis 85 mg/m Länge oder im Bereich von 15 mg/m Länge bis 70 mg/m Länge, beschichtet ist.

9. Pyrotechnisches Trennsystem (10) umfassend ein System (1) nach einem der vorstehenden Ansprüche und eine mit dem Fernanzündmittel (9) gekoppelte pyrotechnische Trenneinrichtung (3) zum Trennen einer zu einer elektrischen Energiequelle, wie einer Batterie oder einem Akkumulator, zum Abführen und/oder Empfangen elektrischer Energie führenden elektrischen Leitung (5), wie einem Kabel, einem Draht, einer Leiterbahn oder dergleichen.

10. Pyrotechnisches Trennsystem (10) nach Anspruch 9, wobei die pyrotechnische Trenneinrichtung (3) ein Gehäuse (11) mit Pyrotechnikmaterial (35) aufweist, das gegenüber dem Fernanzündmittel (9) derart abgedichtet ist, dass insbesondere ausschließlich beim pyrotechnischen Umsetzen des Anzünders (7), insbesondere des Fernanzündmittels (9), die Abdichtung aufgehoben ist.

11. Pyrotechnisches Trennsystem (10) nach Anspruch 10, wobei die Abdichtung derart ausgestaltet ist, dass beim Auslösen der pyrotechnischen Trenneinrichtung (3) die Abdichtung wieder aufgebaut ist, wobei insbesondere die Abdichtung durch eine Rückschlagarmatur (83) realisiert ist.

12. Pyrotechnisches Trennsystem (10) nach einem der Ansprüche 9 bis 11, wobei die pyrotechnische Trenneinrichtung (3) eine Kappmechanik (33) zum Durchtrennen der elektrischen Leitung (5) und einen pyrotechnischen Antrieb (31) zum Betreiben der Kappmechanik (33) aufweist, die dem pyrotechnischen Antrieb (31) derart zugeordnet ist, dass bei Aktivierung des pyrotechnischen Antriebs (31) die Kappmechanik (33) angetrieben wird, wobei insbesondere der pyrotechnische Antrieb (31) mit einem sich temperaturabhängig pyrotechnisch umsetzenden Material (35) ausgestattet ist.

13. Pyrotechnisches Trennsystem (10) nach einem der Ansprüche 9 bis 12, wobei das Fernanzündmittel (9) und die pyrotechnische Trenneinrichtung (3) und/oder das Fernanzündmittel (9) und der Anzünder (7) kraft-, form- und/oder stoffschlüssig miteinander gekoppelt sind.

14. Pyrotechnisches Fernanzündesystem (100) umfassend mehrere pyrotechnische Temperatursensoren (101), die einer elektrischen Energiequelle, wie einer Batterie oder einem Akkumulator, oder mehreren elektrischen Energiequellen, die an eine gemeinsame elektrische Energie führende elektrische Leitung (5) angeschlossen sind, zugeordnet sind, und eine räumlich von den pyrotechnischen Temperatursensoren (101) getrennte pyrotechnische Trenneinrichtung (3), die der zur elektrischen Energiequelle zum Abführen und/oder Empfangen elektrischer Energie führenden elektrischen Leitung (5), wie einem Kabel, einem Draht, einer Leiterbahn oder dergleichen, zugeordnet ist, wobei die pyrotechnische Trenneinrichtung (3) durch Fernanzündmittel (9) mit den pyrotechnischen Temperatursensoren (101) derart gekoppelt ist, dass die pyrotechnische Trenneinrichtung (3) dann von einem der Fernanzündmittel (9) aktiviert wird, wenn der dem Fernanzündmittel (9) zugeordnete pyrotechnische Temperatursensor (101) auslöst.

15. Fernanzündesystem (100) nach Anspruch 14, umfassend wenigstens ein nach einem der Ansprüche 6 bis 8 ausgebildetes System (1) und/oder ein nach einem der Ansprüche 9 bis 13 ausgebildetes pyrotechnisches Trennsystem (10).
